# EUROPEAN PATENT SPECIFICATION

(11) **EP 3 721 148 B1**
(45) Date of publication and mention of the grant of the patent: **11.06.2025**
(21) Application number: 19764443.8
(22) Date of filing: 22.02.2019
(51) Int. Cl.: F24F 11/64, F24F 11/52, G06N 3/08, F24F 110/10, F24F 110/20, F24F 130/20, F24F 140/60, F24F 11/62, F24F 11/80

(54) **AIR CONDITIONER AND METHOD FOR CONTROL THEREOF**
KLIMAANLAGE UND VERFAHREN ZUR STEUERUNG DAVON
CLIMATISEUR ET SON PROCÉDÉ DE COMMANDE

(30) Priority: 05.03.2018 KR 20180025915
(43) Date of publication of application: 14.10.2020
(73) Proprietor: Samsung Electronics Co., Ltd., Gyeonggi-do 16677 (KR)
(72) Inventor: JOO, Youngju, Suwon-si Gyeonggi-do 16677 (KR); HWANG, Jun, Suwon-si Gyeonggi-do 16677 (KR); KANG, Heechan, Suwon-si Gyeonggi-do 16677 (KR); KIM, Minkyong, Suwon-si Gyeonggi-do 16677 (KR); NAM, Kwangil, Suwon-si Gyeonggi-do 16677 (KR); PARK, Jeonguk, Suwon-si Gyeonggi-do 16677 (KR); SEO, Hyeongjoon, Suwon-si Gyeonggi-do 16677 (KR); OCK, Hyunwoo, Suwon-si Gyeonggi-do 16677 (KR); LEE, Sangwoo, Suwon-si Gyeonggi-do 16677 (KR)
(74) Representative: Gulde & Partner
(86) International application number: PCT/KR2019/002190
(87) International publication number: WO 2019/172559

(56) References cited:
- WO-A1-2015/025317
- WO-A1-2017/062896
- JP-A- 2016 194 375
- JP-A- 2017 067 427
- JP-A- 2017 067 427
- JP-B2- 5 492 670
- KR-A- 20180 011 672
- KR-B1- 101 748 661
- US-A1- 2012 125 559
- US-A1- 2014 316 584
- US-A1- 2015 369 503
- US-A1- 2016 054 019

## Description

### [Technical Field]

The present invention relates to an air conditioner and control methods. More particularly, the disclosure relates to an air conditioner and a control method thereof for providing information on an indoor temperature and a desired temperature and a controlling method thereof.

### [Background Art]

In recent years, AI systems that implement human intelligence have been used in various fields. An AI system is a system that the machine learns, judges and becomes smart, unlike the existing rule-based smart system. As the use of AI systems improves recognition rate and understanding of user's taste more accurately, existing rule-based smart systems are gradually being replaced by deep learning-based artificial intelligence systems.

AI technology is composed of machine learning (for example, deep learning) and elementary technologies which utilizes machine learning.

Machine learning is an algorithm technology that classifies / learns the characteristics of input data by itself. Element technology is a technology that simulates functions such as recognition and judgment of human brain using machine learning algorithms such as deep learning. Machine learning is composed of technical fields such as linguistic understanding, visual understanding, reasoning / prediction, knowledge representation, motion control, etc.

Various fields in which AI technology is applied are as follows. Linguistic understanding is a technology for recognizing, applying / processing human language / characters and includes natural language processing, machine translation, dialogue system, question & answer, speech recognition / synthesis, and the like. Visual understanding is a technique for recognizing and processing objects as human vision, including object recognition, object tracking, image search, human recognition, scene understanding, spatial understanding, image enhancement, and the like. Inference prediction is a technique for judging and logically inferring and predicting information, including knowledge / probability based inference, optimization prediction, preference-based planning, and recommendation. Knowledge representation is a technology for automating human experience information into knowledge data, including knowledge building (data generation / classification) and knowledge management (data utilization). The motion control is a technique for controlling the autonomous running of the vehicle and the motion of the robot, including motion control (navigation, collision, driving), operation control (behavior control), and the like.

In recent years, air conditioners for maintaining a comfortable indoor environment by controlling the temperature, humidity, cleanliness and air flow of the indoor space have been widely used.

The air conditioner provides the user only with information on the current indoor temperature and the desired temperature and information on the cumulative usage amount at the time when the operation of the air conditioner is terminated.

Accordingly, there is a problem that a user cannot confirm information about the time required for the indoor temperature to reach the desired temperature or the amount of power consumption at the initial stage of driving the air conditioner.

Accordingly, a user can only adjust the desired temperature depending on the temperature change directly sensed or the change in the indoor temperature provided through the display of the air conditioner. Therefore, there was a problem that energy consumption of the air conditioner becomes excessive.

The above information is presented as background information only to assist with an understanding of the present invention. No determination has been made, and no assertion is made, as to whether any of the above might be applicable as prior art with regard to the present invention.

US 2012/125559 A1 discloses an air conditioner comprising a storage including time information which are required to increase or decrease an indoor temperature by a unit temperature according to an outdoor temperature. In the air conditioner, at least one of power consumption or required time is provided through a display.

### [Disclosure of Invention]

Aspects of the present invention are to address at least the above-mentioned problems and/or disadvantages and to provide at least the advantages described below. Accordingly, the invention is defined in the claims.

In particular, an aspect of the present invention is to provide an air conditioner as defined in claim 1.

The processor may, based on indoor temperature sensed through the sensor being increased or decreased by a preset unit temperature, obtain power consumption and required time which are consumed by the air conditioner so that the indoor temperature increases or decreases by the unit temperature, and update the stored information based on at least one of the obtained power consumption and required time.

The processor may predict an indoor environment in which the air conditioner is disposed based on the obtained power consumption and required time, obtain power consumption information and time information corresponding to the predicted indoor environment, and store the same in the storage, wherein the indoor environment may include at least one of a size, a degree of lighting, and humidity of an indoor space in which the air conditioner is disposed.

The storage may store a use history including at least one of an operation mode of the air conditioner by the sensed indoor temperature and desired temperature, and wherein the processor may obtain a preferred mode and a preferred temperature of a user based on the use history, and predict at least one of power consumption and time which are required for the sensed indoor temperature to reach the preferred temperature in the preferred mode.

The processor may, based on a present time, obtain a preferred mode and preferred temperature of the user preferred at the present time.

The processor may predict at least one of the power consumption and the time through an artificial intelligence (AI) model, wherein the AI model is a model that is learned based on at least one of the power consumption information, the time information, and an indoor environment in which the air conditioner is disposed, and wherein the indoor environment may include at least one of a size, a degree of lighting, and humidity of an indoor space in which the air conditioner is disposed. The processor may, if a difference between the sensed indoor temperature and the desired temperature is greater than or equal to a predetermined value, set the air conditioner to a first mode, and predict at least one of power consumption and time which are required for the sensed indoor temperature to reach the desired temperature based on an air conditioning function in the first mode, and if a difference between the sensed indoor temperature and the desired temperature is less than a predetermined value, set the air conditioner to a second mode, and predict at least one of power consumption and time which are required for the sensed indoor temperature to reach the desired temperature based on an air conditioning function in the second mode.

In accordance with another aspect of the present invention, a controlling method of an air conditioner is provided as defined in claim 7.

The method may include receiving information on outdoor temperature of an area in which the air conditioner is disposed, wherein the predicting may include predicting at least one of power consumption and time required to reach the desired temperature based on the received outdoor temperature and the sensed indoor temperature.

According to various embodiments as described above, a user can be provided with information to predict remaining time or estimated power consumption until indoor environment reaches a pleasant environment at an early stage of driving of an air conditioner.

Other aspects, advantages, and salient features of the present invention will become apparent to those skilled in the art from the following detailed description, which, taken in conjunction with the annexed drawings, discloses various embodiments of the present invention.

### [Advantageous Effects of Invention]

-

### [Brief Description of Drawings]

The above and other aspects, features, and advantages of certain embodiments of the disclosure will be more apparent from the following description taken in conjunction with the accompanying drawings, in which:
FIG. 1 is a block diagram to describe an air conditioner according to an embodiment of the disclosure;
FIG. 2 is a flowchart to describe a method for predicting power consumption and required time according to an embodiment of the disclosure;
FIG. 3 is a view to describe predicted power consumption and required time according to an embodiment of the disclosure;
FIG. 4A is a view to describe a method of obtaining information on power consumption and required time according to an embodiment of the disclosure;
FIG. 4B is a view to describe information on power consumption and required time according to an embodiment of the disclosure;
FIG. 5 is a view to describe information obtained by an air conditioner according to another embodiment of the disclosure;
FIG. 6 is a view to describe an operation mode of an air conditioner according to an embodiment of the disclosure;
FIG. 7 is a view to describe recommended temperature of an air conditioner according to an embodiment of the disclosure;
FIG. 8 is a view to describe a recommended mode of an air conditioner according to an embodiment of the disclosure;
FIG. 9 is a flowchart to describe a controlling method of an air conditioner according to an embodiment of the disclosure;
FIG. 10 is a block diagram illustrating a configuration of an air conditioner to learn and use an artificial intelligence (AI) model according to an embodiment of the disclosure;
FIG. 11A is a block diagram of a learning unit and a determination unit according to various embodiments of the disclosure; and
FIG. 11B is a view to illustrate an example of learning and determining data by interlocking an air conditioner and an external server according to an embodiment of the disclosure.

Throughout the drawings, like reference numerals will be understood to refer to like parts, components, and structures.

### [Best Mode for Carrying out the Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. The terms and words used in the following description and claims are not limited to the bibliographical meanings, but, are merely used by the inventor to enable a clear and consistent understanding of the disclosure.

It is to be understood that the singular forms "a," "an," and "the" include plural referents unless the context clearly dictates otherwise. Thus, for example, reference to "a component surface" includes reference to one or more of such surfaces.

As embodiments may have a variety of modifications and several examples, certain embodiments will be exemplified in the drawings and described in detail in the description thereof. In the disclosure, relational terms such as first and second, and the like, may be used to distinguish one entity from another entity, without necessarily implying any actual relationship or order between such entities. In embodiments of the disclosure, relational terms such as first and second, and the like, may be used to distinguish one entity from another entity, without necessarily implying any actual relationship or order between such entities.

The terms "include," "comprise," "is configured to," etc., of the description are used to indicate that there are features, numbers, operations, elements, parts or combination thereof, and they should not exclude the possibilities of combination or addition of one or more features, numbers, operations, elements, parts or a combination thereof.

According to embodiments, a "module" or "unit" performs at least one function or operation, and may be implemented as hardware or software, or a combination of hardware and software. In addition, a plurality of 'modules' or a plurality of 'units' may be integrated into at least one module and may be realized as at least one processor except for 'modules' or 'units' that should be realized in a specific hardware.

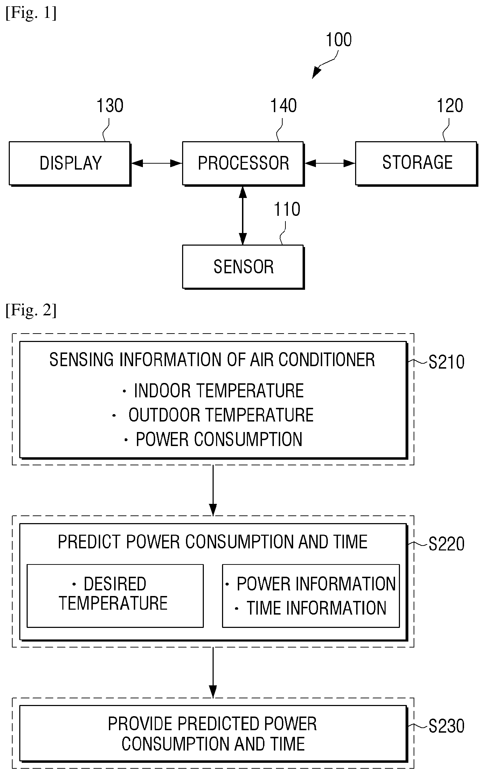

FIG. 1 is a block diagram to describe an air conditioner according to an embodiment of the disclosure.

Referring to FIG. 1, the air conditioner 100 includes a sensor 110, a storage unit 120, a display 130, and a processor 140.

The air conditioner 100 according to an embodiment of the disclosure is an air conditioner and an air conditioner, which means various types of apparatuses that keep a room pleasant by heating, cooling, humidity control, humidification, ventilation, and so on. For example, the air conditioner 100 may be implemented as an air conditioning device which can serve as a heater, an air conditioner capable of both heating and cooling. However, the disclosure is not limited thereto, and the air conditioner 100 may be implemented by various types of apparatuses capable of increasing or decreasing an indoor temperature, and the disclosure can be applied to an apparatus that is capable of only cooling or heating. Hereinafter, for convenience of explanation, the air conditioner 100 is assumed to be an air conditioner capable of both cooling and heating.

The air conditioner 100 according to an embodiment of the present invention may include an indoor unit and an outdoor unit. The indoor unit is connected to the outdoor unit, and the indoor unit exchanges a refrigerant with the outdoor unit through the piping. The air conditioner 100 including the indoor unit and the outdoor unit may include various operation modes such as cooling for lowering the temperature of the indoor air, heating for raising the temperature of the indoor air, ventilation for forming air current in a room, and dehumidification for lowering indoor humidity, and the like. The operation mode of the air conditioner 100 will be described later.

The outdoor unit according to an embodiment of the disclosure exchanges heat with outside air. The outdoor unit can exchange heat with outside air through a cooling cycle that discharges heat transferred from the indoor unit through the refrigerant to the outside, or can exchange heat with the outside air through a heating cycle in which heat absorbed from the outside is absorbed by the refrigerant. The outdoor unit includes a compressor for compressing the refrigerant. The compressor may be implemented in any one of a constant speed type, a step type (or twin power cooling system (TPS)), and an inverter type. Constant-speed type is a type in which the driving of the compressor is controlled on / off in accordance with the cooling / heating load. The step type includes a plurality of compressors and controls the number of compressors to be driven in accordance with the cooling / heating load. The inverter type is a control type that linearly increases or decreases the driving ability of the compressor according to the cooling / heating load.

The sensor 110 may sense ambient air information of the air conditioner 100. Here, the ambient air information may include various information such as indoor temperature, room humidity, room air volume, etc., as information related to the room air in which the air conditioner 100 is disposed. However, the present invention is not limited thereto, and the sensor 110 may be provided in the indoor unit to sense the indoor temperature, and may be provided in the outdoor unit to sense the outdoor temperature. The sensor 110 may include a temperature sensor for sensing the temperature, an air speed sensor for sensing the wind speed of the room, a humidity sensor for sensing the humidity of the air, and the like.

The storage unit 120 stores power consumption information and time information required to increase or decrease the indoor temperature by the unit temperature according to the outdoor temperature.

Here, the outdoor temperature means the outdoor air temperature of an area where the air conditioner 100 is disposed. For example, the outdoor temperature may mean an initial temperature sensed through the outdoor unit included in the air conditioner 100. As another example, it is of course possible to receive, from the server, information on the outdoor temperature of the area in which the air conditioner 100 is disposed. Information on power consumption and required time for increasing and decreasing indoor temperature by unit temperature is different according to outdoor temperature, and the storage unit 120 may store information power consumption and required time consumed to increase and decrease indoor temperature by unit temperature by outdoor temperatures. For example, the storage unit 120 may store information on power consumption and time to reduce indoor temperature by 1degree Celsius when outdoor temperature is 30degrees Celsius and indoor temperature is 29 degrees Celsius, and when outdoor temperature is 35 degrees Celsius and indoor temperature is 29 degrees Celsius.

The storage unit 120 according to an embodiment may store power consumption information and time information required to increase and decrease the indoor temperature by a unit temperature according to the operation mode, the outdoor temperature, the indoor humidity, and the size of the space in which the air conditioner 100 is disposed.

The storage unit 120 according to an embodiment of the present invention may store the usage history of the user. For example, the storage unit 120 may store a usage history including at least one of an operation mode and a desired temperature of the air conditioner 100 set by the user. Here, the desired temperature means an indoor temperature to be reached by operating the air conditioner 100, and may be called a set temperature.

In particular, the storage unit 120 according to an embodiment may store at least one of the operating mode and the desired temperature of the air conditioner 100 sensed through the sensor 110 by the indoor temperature as a usage history. Since the operation mode and the desired temperature set by the user may be different according to the indoor temperature, the operation mode and the desired temperature can be stored according to the indoor temperature. For example, the air conditioner 100 may store the usage history of the user such as the dehumidification mode at the indoor temperature of 25 degrees Celsius in the operation mode and 24degrees Celsius as the desired temperature in the storage unit 120.

The display 130 may be implemented with various types of displays such as an organic light emitting diode (OLED), a seven-segment display, and the like.

The display 130 according to an embodiment of the present invention may display various information about the air conditioner 100. In particular, the display 130 may display at least one of the ambient air information and operating state of the air conditioner 100, such as outdoor temperature, indoor temperature, desired temperature, and operating mode.

In particular, the display 130 may display the power consumption and time required for the indoor temperature to reach the desired temperature. A detailed description thereof will be given in the processor 140.

The processor 140 controls the operation of the air conditioner 100 as a whole.

According to an embodiment, the processor 140 may be implemented as a digital signal processor (DSP), a microprocessor, a time controller (TCON), etc. However, the present invention is not limited thereto, and may include or be defined as a central processing unit (CPU), a microcontroller unit (MCU), a micro processing unit (MPU), a controller, an application processor (AP), a communication processor (CP), and an ARM processor. The processor 140 may be implemented as a system on chip (SoC), a large scale integration (LSI) with a built-in processing algorithm, or a field programmable gate array (FPGA).

The processor 140 predicts at least one of the power consumption and the time required for the sensed indoor temperature to reach the desired temperature based on the information stored in the storage unit 120, when the desired temperature is input. For example, when the outdoor temperature is 33 degrees Celsius, the processor 140 can predict the power consumption and time required for the indoor temperature to reach the desired temperature of 20 degrees Celsius at the sensed indoor temperature of 30 degrees Celsius.

The processor 140 according to an embodiment of the present invention may predict at least one of the power consumption and the time required for the indoor temperature sensed through a learned artificial intelligence (AI) model to reach the desired temperature based on the information stored in the storage unit 120. Herein, the AI model may exist in the air conditioner 100, but it may exist in an external server only by way of an embodiment, and the air conditioner 100 may transmit the desired temperature to the external server, predict at least one of power consumption and time required for the indoor temperature to reach the desired temperature using the AI model, and the air conditioner 100 may receive at least one of the power consumption and the time predicted from the external server.

The AI model according to an embodiment of the present invention may be a model which is learned to predict at least one of power consumption and the time which are required so that indoor temperature reaches desired temperature, using power and time required by the air conditioner 100 for increasing indoor temperature by unit temperature, and indoor environment in which the air conditioner 100 is disposed as input data. Here, the indoor environment may include at least one of the size of the indoor space in which the air conditioner is disposed, the degree of lighting and humidity.

The AI model according to an embodiment may be re-learned by information on power consumption and required time which are obtained by operation of the air conditioner 100.

The processor 140 in accordance with an embodiment of the present invention providespredicted power consumption and time through the display 130. Thus, the processor 140 can provide the user with the power and time that the air conditioner 100 is expected to consume until the indoor temperature reaches the desired temperature.

When the indoor temperature is sensed by the sensor 110 to be increased or decreased by a predetermined unit temperature, the processor 140 may identify the power and time which are required by the air conditioner 100 to increase or decrease indoor temperature by the unit temperature. For example, if the indoor temperature is reduced from 29 degrees Celsius to 28 degrees Celsius, the power and time which are required for the air conditioner 100 to reduce the indoor temperature by 1 degree Celsius can be identified.

The processor 140 according to an embodiment of the present invention differs in power and time required to reduce the indoor temperature by 1 degree Celsius when the outdoor temperature is 35 degrees Celsius and when the outdoor temperature is 28 degrees Celsius, and thus, the processor may identify the power and time consumed to increase or decrease the indoor temperature by the unit temperature.

The processor 140 may update the information stored in the storage unit 120 based on at least one of the identified power consumption and the required time.

The processor 140 according to an embodiment of the present invention may identify the time required for the indoor temperature to be reduced by a predetermined unit temperature in accordance with the operation of the air conditioner 100, and update the time information prestored in the storage unit 120.

As another example, the processor 140 may identify the consumed power in which the indoor temperature is reduced by a predetermined unit temperature in accordance with the operation of the air conditioner 100, and update information on the power consumption pre-stored in the storage unit 120 based on the identified information.

The AI model according to an embodiment of the present invention can be re-learned based on updated information. The process of re-learning of the AI model will be described in detail with reference to drawings later.

The processor 140 according to an embodiment, when indoor temperature which is sensed through the sensor 110 increases or decreases by a predetermined unit temperature, may identify consumed power of the air conditioner 100 and required time to increase or decrease the indoor temperature by a unit temperature, and the processor 140, based on the identified power consumption and required time, may predict an indoor environment in which the air conditioner is disposed. For example, the processor 140, based on power consumption and required time to reduce in door temperature from 28degrees Celsius to 27 degrees Celsius, when outdoor temperature is 35 degrees Celsius, may predict an indoor environment where the air conditioner 100 is disposed. Here, the indoor environment may include at least one of a size of an indoor space, a degree of lighting, and humidity.

Power and time which are required to reduce indoor temperature by 1degree Celsius may be different by sizes of spaces. For example, the larger the size of the space is, the greater the required power and time comparatively increase, and the smaller the size of the space is, the smaller the required power and time would decrease. The processor 140, based on identified power consumption and required time, may predict a size of an indoor space.

The processor 140 according to an embodiment may acquire power consumption information and time information corresponding to the predicted indoor environment and store the information in the storage unit 120. The AI model according to an embodiment of the present invention may be a model learned based on power consumption information, time information, and indoor environment. As another example, the AI model can be re-learned based on the obtained information when power consumption information and time information corresponding to the predicted indoor environment are obtained.

The processor 140 according to an embodiment may predict at least one of power consumption and time required for the indoor temperature to reach the desired temperature through the re-learned AI model based on the power consumption information and the time information considering the indoor environment. Accordingly, relatively accurately predicted power consumption and time may be provided through the display 110.

The processor 140 according to an embodiment of the present invention compares at least one of the obtained power consumption and the required time with at least one of power consumption information and time information stored in the storage unit 120, and provides feedback according to a comparison result.

In particular, the processor 140 identifies whether the comparison result exceeds a predetermined error range. For example, it is assumed that, when the outdoor temperature is 35 degrees Celsius, if the indoor temperature decreases from 28 degrees Celsius to 27 degrees Celsius, and the time required is 180 seconds (sec), and the time information is 90 sec according to the time information stored in the storage unit 120. Since the processor 140 has taken about twice as much time to reduce the indoor temperature by 1 degree Celsius, the comparison result can be identified as exceeding a predetermined error range.

The processor 140 according to an embodiment may re-predict at least one of the power consumption information and the time information using the AI model. In fact, if the difference between the time spent to reduce the indoor temperature and the predicted time is large, the processor 140 may predict the time information and provide the predicted time information. Here, the processor 140 may sense at least one of the outdoor temperature and the indoor temperature again, and re-predict the time information through the AI model based on the sensed outdoor temperature and the indoor temperature.

As another example, the processor 140 may provide a guide to the indoor environment in which the air conditioner 100 is located if the comparison result is identified as exceeding a predetermined error range. For example, a guide to the indoor environment may include phrases such as "Make sure the windows are open" and "Hang a window with a curtain to control the lighting." If it is identified that at least one of power consumption and required time which are consumed to increase or decrease indoor temperature according to inflow of external air increases greater than or equal to a preset error range, a guide such as "please check whether the windows are open" can be provided.

The processor 140 according to an embodiment of the present invention can acquire the user's preferred mode and the preferred temperature based on the usage history stored in the storage unit 120. The processor 140 can predict the power consumption and time required for the indoor temperature to reach the preferred temperature on the preferred mode. For example, the processor 140 may obtain a dehumidification mode and a temperature of 21 degrees Celsius, respectively, in the preferred mode and the preferred temperature, respectively, according to the user's usage history. The processor 140 can predict the power consumption and time required for the indoor temperature to reach 21 degrees Celsius in the dehumidification mode.

The power consumption and time which are required to increase and decrease indoor temperature by unit temperature according to an operation mode of the air conditioner 100 are different. The processor 140, based on an operation mode, may predict power consumption and time required so that indoor temperature reaches the desired temperature or preferred temperature.

The usage history according to an embodiment of the present invention may further include time information when the air conditioner 100 operates. The processor 140 may obtain the preferred mode and the preferred temperature of the user at the current time based on the current time. For example, the processor 140 may acquire "rapid cooling" and "20 degrees Celsius" respectively at 1:00 pm on the user's preferred mode and preferred temperature at 1:00 pm, and "power-saving mode" and "22 degrees Celsius" respectively at 11:00 pm. The processor 140 can operate with the preferred mode and the preferred temperature obtained based on the current time as the operation mode and the desired temperature, respectively, and predict power consumption and time required so that indoor temperature reaches the preferred temperature in the preferred mode.

The processor 140 according to another embodiment of the present invention can set the air conditioner 100 to a mode optimized for the current time if the current time is within a predetermined time range. For example, the optimized mode of the air conditioner 100 may be preset for each time zone. The processor 140 may set the optimized mode corresponding to the current time to the operating mode.

According to an embodiment, at least one of the sleep mode, the tropical night's pleasant sleep mode, and the power saving mode may be preset to an optimized mode in the time zone from 10:00 pm to 6:00 am on the next day. The processor 140 can set at least one of the sleep mode, the tropical night's pleasant sleep mode, and the power saving mode to the operation mode of the air conditioner 100 if the current time is within the time range from 10 pm to 6 am.

If the difference between the sensed indoor temperature and the desired temperature is equal to or greater than a preset value, the processor 140 according to the embodiment of the present invention may set the air conditioner to the first mode, and if the difference is less than the preset value, the air conditioner can be set to the second mode. For example, if the difference between the indoor temperature and the desired temperature is 3 degrees Celsius or more, the processor 140 can set the rapid cooling mode. As another example, if the difference between the indoor temperature and the desired temperature is less than 3 degrees Celsius, the processor 140 may set the power saving mode.

According to an embodiment, the processor 140 can estimate the power consumption and time required for the sensed indoor temperature to reach the desired temperature based on the air conditioning performance in the set mode. For example, the air conditioning performance of the air conditioner 100 may differ from one operation mode to another. Since the wind strength and the dehumidification performance in the rapid cooling mode are different from the wind strength and the dehumidification performance in the power saving mode, the processor 140 can predict the power consumption and the time in consideration of the air conditioning performance corresponding to the mode. When the air conditioner 100 is set to the first mode, the processor 140 may estimate power consumption and time based on the air conditioning performance of the first mode, and when the air conditioner 100 is set to the second mode, may predict power consumption and time based on the air conditioning function of the second mode.

The processor 140 according to an embodiment, if indoor temperature sensed through the sensor reaches the desired temperature, may provide accumulated consumption power through the display 130.

The air conditioner 100 according to the embodiment of the present invention may include a communication unit (not shown). The communication unit is configured to perform communication with various types of external devices according to various types of communication methods. The communication unit includes a Wi-Fi chip, a Bluetooth chip, a wireless communication chip, a near field communication (NFC) chip, and the like.

In particular, the communication unit may receive information on outdoor information of an area where the air conditioner 100 is disposed by performing communication with a server.

The communication unit according to an embodiment may communicate with the server to receive power consumption information and time information. For example, if the power consumption information and the time information are not stored in the storage unit 120, the processor 140 may receive the power consumption information and the time information from the server through the communication unit, and based on the received information, predict power consumption and time. However, the present invention is not limited thereto, and the processor 140 may receive, from the communication unit, power consumption information and time which are required to increase and decrease indoor temperature by unit temperatures of a space where the air conditioner 100 is disposed by operation modes, outdoor temperatures, indoor humidity, and a size of the space where the air conditioner 100 is disposed.

As another example, the air conditioner 100 may receive the AI model from the server. Herein, the AI model may be a model which is learned based on power consumption information and time information which are required to increase and decrease indoor temperature by unit temperatures by operation modes of the air conditioner 100, outdoor temperatures, indoor humidity, and a size of a space where the air conditioner 100 is disposed. The air conditioner 100 may predict at least one of power consumption and time which are required so that indoor temperature reaches desired temperature using the received AI model.

The communication unit performs communication using a Wi-Fi method and a Bluetooth method, respectively. When a Wi-Fi chip or a Bluetooth chip is used, various connection information such as a service set identifier (SSID) and a session key may be transmitted and received first, and communication information may be used to transmit and receive various information. The wireless communication chip means a chip that performs communication according to various communication standards such as IEEE, zigbee, 3rd generation (3G), 3rd generation partnership project (3GPP), long term evolution (LTE). The NFC chip refers to a chip operating in a NFC mode using 13.56 MHz band among various radio frequency identification (RF-ID) frequency bands such as 135 kHz, 13.56 MHz, 433 MHz, 860 to 960 MHz, 2.45 GHz.

The air conditioner 100 according to another embodiment may include a speaker (not shown). The predicted power consumption and time provided through the display 130 according to various embodiments can be output as a voice signal through a speaker.

Hereinabove, it has been described that the air conditioner 100 decreases indoor temperature according to an embodiment, but application of the present invention is also available in a case of increasing indoor temperature in a reverse case.

The AI model is a learned determination model based on an AI algorithm, for example, it may be a model based on a neural network. The learned AI model may include a plurality of weighted network nodes that may be designed to simulate the human brain structure on a computer and simulate a neuron of a human neural network. The plurality of network nodes may each establish a connection relationship so that the neurons simulate the synaptic activity of the neurons sending and receiving signals through the synapse. Also, the learned AI model may include, for example, a neural network model or a deep learning model developed from a neural network model. In the deep learning model, a plurality of network nodes are located at different depths (or layers), and may transmit and receive data according to a convolution connection relationship. Examples of learned determination models include, but are not limited to, deep neural network (DNN), recurrent neural network (RNN), and bidirectional recurrent deep neural network (BRDNN).

In addition, the air conditioner 100 may use an AI dedicated program (or an AI agent) for predicting at least one of the power consumption and the time required for the desired temperature. At this time, the AI dedicated program is a dedicated program for providing an AI-based service, and can be executed by a general purpose processor (e.g., a CPU) or a separate AI dedicated processor (e.g., a graphic processing unit (GPU), etc.).

Specifically, when a predetermined user input is input or a button (for example, a button requesting provision of estimated power consumption, an expected time, etc., a button for executing an AI agent) provided on the air conditioner 100 is pressed or desired temperature is input, the AI agent can be operating (or running). In addition, the AI agent may transmit the input desired temperature to an external server, and output at least one of the estimated power consumption and the estimated time received from an external server.

FIG. 2 is a flowchart to describe a method for predicting power consumption and required time according to an embodiment of the present invention.

Referring to FIG. 2, the air conditioner 100 senses indoor temperature. The air conditioner 100 may sense outdoor temperature, power consumption, and so on in operation S210. However, the present invention is not limited thereto, and it is needless to say that it is also possible to receive information on the outdoor temperature of the area where the air conditioner 100 is disposed from the server.

The air conditioner 100, based on power consumption information and time information, predicts power consumption and time which are required so that indoor temperature reaches the desired temperature in operation S220.

Then, the air conditioner 100 provides the predicted power consumption and time in operation S230. The predicted power consumption and time according to an embodiment may be provided through the display. However, the present invention is not limited thereto, and the air conditioner 100 may output sound through a speaker.

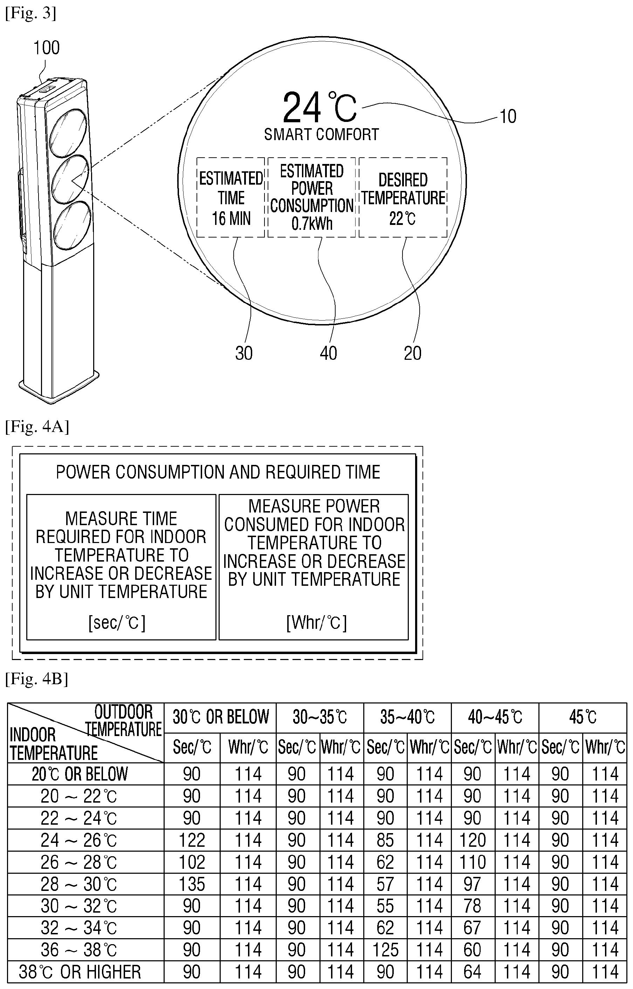

FIG. 3 is a view to describe predicted power consumption and required time according to an embodiment of the present invention.

Referring to FIG. 3, when the indoor temperature 10 is 24 degrees Celsius, the estimated time 30 and estimated power consumption 40 until the indoor temperature 10 reaches the desired temperature 20, which is 22 degrees Celsius, can be displayed.

Since the estimated time 30 and the estimated power consumption 40 required for the indoor temperature 10 to reach the desired temperature 20 are provided to the user, the operation mode suitable for the current indoor temperature 10, and desired temperature 20 may be selected. The power consumption of the air conditioner 100 can be efficiently managed.

FIG. 4A is a view to describe a method of obtaining information on power consumption and required time according to an embodiment of the present invention.

Referring to FIG. 4A, when the sensed indoor temperature is increased or decreased by a preset unit temperature, the air conditioner 100 may obtain the required time and power consumption which the air conditioner consumed to increase or decrease indoor temperature by the unit temperature.

For example, when the indoor temperature is reduced from 29 degrees Celsius to 28 degrees Celsius at the outdoor temperature of 30 degrees Celsius, the power (Watt-hour (Whr) / degree Celsius) consumed by the air conditioner 100 and the required time (sec / degree Celsius) can be obtained. The air conditioner 100 may store the obtained power consumption and the required time.

FIG. 4B is a view to describe information on power consumption and required time according to an embodiment of the present invention.

Referring to FIG. 4B, the air conditioner 100 stores a table including power consumption information and time information required to increase and decrease the indoor temperature by the unit temperature according to the outdoor temperature.

For example, it can be known that time 90 sec and power 114 Whr are required so that the indoor temperature is reduced from 24degrees Celsius to 23degrees Celsius at the outdoor temperature of 35 degrees Celsius.

The air conditioner 100 according to an embodiment of the present invention can acquire the power consumed by the air conditioner 100 and the time required for the indoor temperature to be increased or decreased by the unit temperature when an increase or decrease in the indoor temperature is detected. The air conditioner 100 can update the table shown in FIG. 4B based on the obtained power consumption and the required time. Further, as described above, the AI model can be re-learned by using updated tables as input data.

The air conditioner 100 according to the embodiment of the present invention can predict the power consumption and time required for the indoor temperature to reach the desired temperature based on the table shown in FIG. 4B. For example, if the outdoor temperature is 29 degrees Celsius, the indoor temperature is 29 degrees Celsius, and the desired temperature is 24 degrees Celsius, the air conditioner 100 can predict the required time based on the following Equation 1. 583(sec) = 135(sec/degree Celsius) * 1(degree Celsius) + 102(sec/degree Celsius) * 2(degrees Celsius) +122 (sec/degree Celsius) * 2(degrees Celsius)

The air conditioner 100 according to the embodiment can estimate the required time to reach 583 sec, that is, the time required for the indoor temperature to reach 24 degrees Celsius from 29 degrees Celsius as 9 minutes and 42 seconds.

The air conditioner 100 according to an embodiment of the present invention may store the table shown in FIG. 4B, but the present invention is not limited thereto. For example, as shown in FIG. 4A, when the increase / decrease of the indoor temperature is sensed through the sensor 110, the air conditioner 100 can acquire the power consumed and the time taken for the indoor temperature to increase / decrease by the unit temperature. It is needless to say that it is possible to generate, improve or update the table shown in FIG. 4B based on the obtained power consumption and the required time.

As another example, the air conditioner 100 may receive and store power consumption information and time information from a server (not shown). The air conditioner 100 can receive power consumption information and time information required to increase or decrease the indoor temperature according to the operation mode, the outdoor temperature, the room humidity, and the indoor space of the air conditioner 100 by the unit temperature from the server.

It is needless to say that the air conditioner 100 according to the present invention may predict power consumption. For example, if the outdoor temperature is 29 degrees Celsius, the indoor temperature is 29 degrees Celsius, and the desired temperature is 24 degrees Celsius, the air conditioner 100 can predict the power consumption based on the following Equation 2. 570(Whr) = 114(Whr/degree Celsius) * 1(degree Celsius) + 114(Whr/degree Celsius) * 2(degrees Celsius) +114 (Whr/degrees Celsius) * 2(degrees Celsius)

The air conditioner 100 according to an embodiment can predict 570 (Whr) as the power consumption, that is, 570 (Whr) as the power consumption when the indoor temperature reaches 24 degrees Celsius from 29 degrees Celsius.

The numbers corresponding to the power consumption information and time information shown in FIG. 4B are one embodiment, but the present invention is not limited thereto. The air conditioner 100 may include a plurality of tables including power consumption information and time information corresponding to various criteria such as the size of the indoor space, the indoor humidity, the degree of lighting of the indoor space, the operation mode of the air conditioner 100, and so on. The power consumption information and the time information may be acquired by experiments and stored at the time of manufacturing the air conditioner 100, and may be received from the server. However, the disclosure is not limited to this, and it is needless to say that it may be acquired based on the sensed power consumption and time required during the operation of the air conditioner 100.

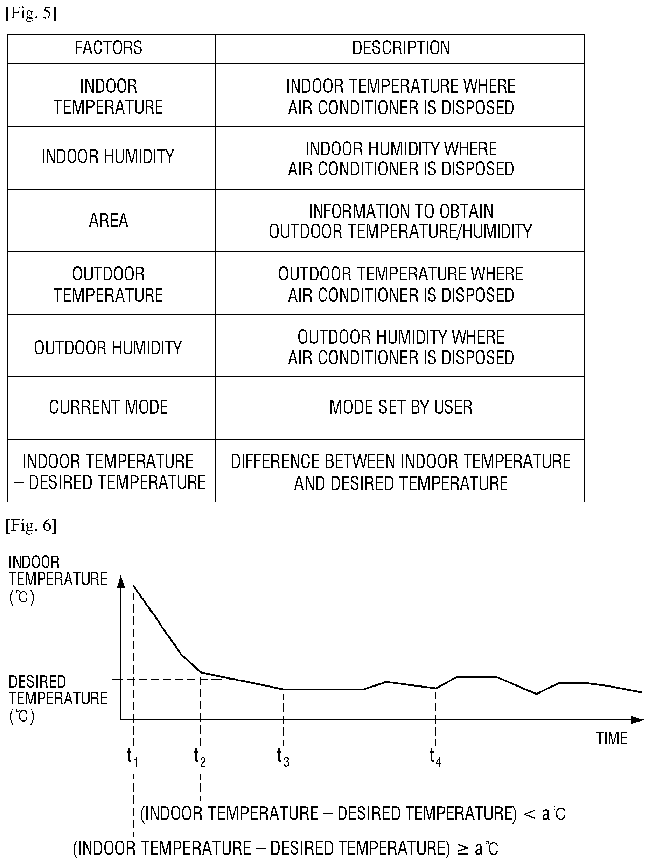

FIG. 5 is a view to describe information obtained by an air conditioner according to an embodiment of the present invention.

Referring to FIG. 5, the air conditioner 100 according to another embodiment may sense various information in addition to the power consumption and required time as illustrated in FIG. 4A, and store sensed information as use history.

For example, the air conditioner 100 may additionally sense at least one of the indoor temperature, the indoor humidity, the information about the area where the air conditioner 100 is disposed, the outdoor temperature, the outdoor humidity, the current mode, the current time, and the difference between the indoor temperature and the desired temperature (indoor temperature-desired temperature).

Power consumption and required time to increase or decrease indoor temperature by unit temperature according to various variables such as indoor humidity, outdoor humidity, current mode (operation mode) of the air conditioner 100 can be different, in addition to the outdoor temperature and the indoor temperature. The air conditioner 100 according to an embodiment may sense various indoor environments such as an operation mode, humidity, and a size of a space and obtain power consumption and required time consumed by the air conditioner 100 so that the indoor temperature increases or decreases by unit temperature in the operation mode or sensed indoor environment.

The air conditioner 100 according to an embodiment can generate a plurality of tables corresponding to each of the operation mode and the indoor environment. The air conditioner 100 may predict the power consumption and time required for the indoor temperature to reach the desired temperature through the learned AI model based on the power consumption information and the time information included in the table corresponding to the operation mode and the indoor environment.

In particular, the air conditioner 100 according to an embodiment of the present invention can store a usage history including an operation mode and a desired temperature of the air conditioner per indoor temperature sensed. The air conditioner 100 can acquire the user's preferred mode and the preferred temperature based on the use history and predict the power consumption and time required for the indoor temperature to reach the preferred temperature on the preferred mode.

FIG. 6 is a view to describe an operation mode of an air conditioner according to an embodiment of the present invention.

Referring to FIG. 6, the air conditioner 100 may set an operation mode of the air conditioner 100 according to the difference (indoor temperature - desired temperature) between the indoor temperature and the desired temperature.

For example, the air conditioner 100 may predict power consumption and time required for the indoor temperature to reach the desired temperature at t1, and provide predicted power consumption and time.

If the difference between the indoor temperature sensed at t1 and the desired temperature is equal to or greater than a preset value ((indoor temperature-desired temperature) ≥ a degrees Celsius), the air conditioner 100 according to the embodiment of the present invention may set the air conditioner to the first mode, and predict the power consumption and time required for the indoor temperature to reach For example, when the difference between the indoor temperature and the desired temperature is large, the air conditioner 100 can perform cooling by setting an operation mode having a relatively excellent air conditioning performance among a plurality of operation modes. The better the air conditioning performance is, the higher the power consumption can be, but the advantage is that the time required for the indoor temperature to reach the desired temperature is reduced.

When the difference between the indoor temperature sensed at t2 and the desired temperature is less than a preset value ((indoor temperature-desired temperature) <a degrees Celsius), the air conditioner 100 according to the embodiment of the present invention sets the air conditioner to the second mode, and predict the power consumption and time required for the indoor temperature to reach the desired temperature based on the air conditioning performance in the second mode. For example, when the difference between the indoor temperature and the desired temperature is not large, the air conditioner 100 may set a dehumidifying mode, a power saving mode, a no-wind mode, and the like. The air conditioner 100 can perform cooling by switching to a mode in which the indoor temperature is relatively increased while the time at which the indoor temperature reaches the desired temperature is relatively low.

The air conditioner 100 according to the embodiment of the present invention can provide at least one of the cumulative power consumption and the cumulative use time through the display since the indoor temperature has reached the desired temperature at t3 and t4.

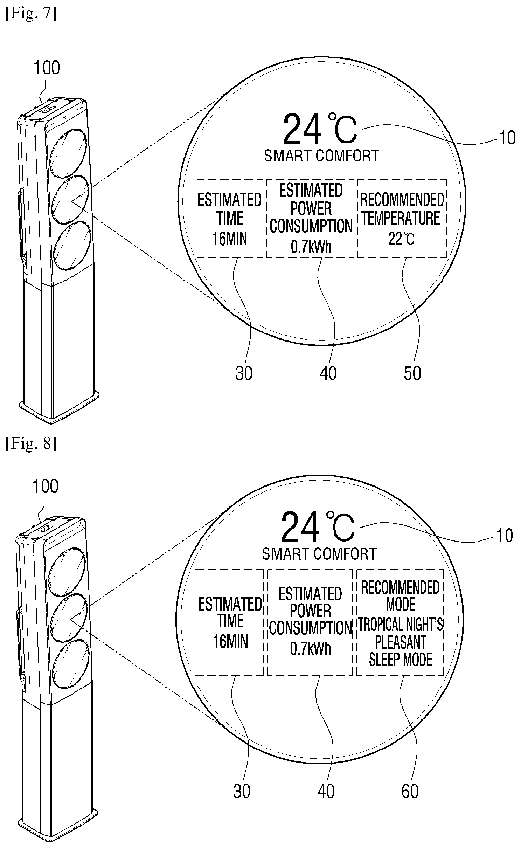

FIG. 7 is a view to describe recommended temperature of an air conditioner according to an embodiment of the present invention.

Referring to FIG. 7, the air conditioner 100 may acquire a preferred temperature based on use history. For example when the preferred temperature according to use history is 22 degrees Celsius, recommended temperature 50 of 22degrees Celsius can be displayed.

The air conditioner 100 may estimate the power consumption and time required for the indoor temperature 10 which is 24degrees Celsius to reach the recommended temperature 50 which is 22 degrees Celsius, and display the estimated time 30 and the estimated power consumption 40.

FIG. 8 is a view to describe a recommended mode of an air conditioner according to an embodiment of the present invention.

Referring to FIG. 8, the air conditioner 100 can acquire the preferred mode based on the use history. For example, if the preferred mode according to the use history is the "tropical night's pleasant sleep mode," the "tropical night's pleasant sleep mode" can be displayed in the recommended mode 60.

The air conditioner 100 may predict power consumption and time which are required until the indoor temperature 10 reaches the desired temperature in the recommended mode and display the estimated time 30 and the estimated power consumption 40.

The air conditioner 100 according to an embodiment can acquire the preferred mode and temperature at the current time based on the current time. For example, if "smart comfort" is in the preferred mode from 1:00 pm to 5:00 pm on the basis of the use history of the user and the current time is included from 1:00 pm to 5:00 pm, the air conditioner 100 can set "smart comport" to the operation mode.

As another example, when at least one of the current time, the external temperature, and the external humidity is within a predetermined range, the air conditioner 100 can be set to the mode optimized for the current time. For example, if the current time is 10:00 PM to 6:00 AM, "tropical night's pleasant sleep mode" can be set. As another example, if the external humidity is 70% or more, a "dehumidification mode" can be set.

The air conditioner 100 according to an embodiment of the present invention can set an operation mode based on a difference between an indoor temperature and a desired temperature. For example, if the difference between the indoor temperature and the desired temperature is equal to or greater than a preset value, the air conditioner 100 is set to the first mode, and if the difference between the sensed indoor temperature and the desired temperature is less than a predetermined value, the air conditioner 100 can be set to the second mode.

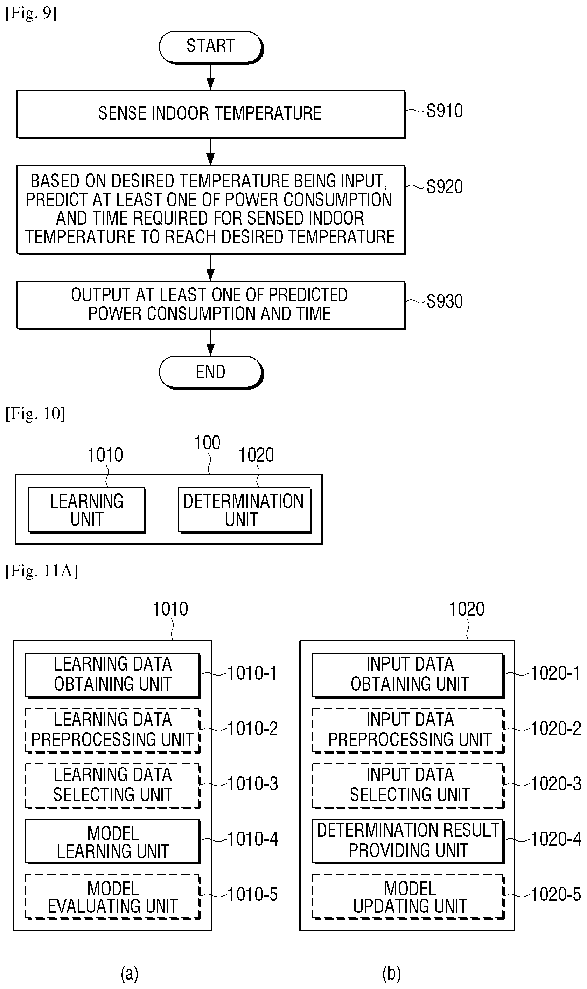

FIG. 9 is a flowchart to describe a controlling method of an air conditioner according to an embodiment of the present invention.

According to the control method of the air conditioner in which the power consumption information and the time information required to increase and decrease the indoor temperature by the unit temperature according to the outdoor temperature shown in FIG. 9 are stored, the indoor temperature is sensed in operation S910.

Then, when desired temperature is input, at least one of power consumption and time which are required so that the sensed indoor temperature to reach to the desired temperature is predicted in operation S920.

Then, at least one of the predicted power consumption and time is output in operation S930.

The control method according to an embodiment of the present invention includes receiving information on the outdoor temperature of the area where the air conditioner is disposed, and the step of predicting S920 may include predicting at least one of power consumption and time required so as to reach the desired temperature based on the received outdoor temperature and the sensed indoor temperature.

The control method according to an embodiment of the present invention includes the steps of acquiring the power consumed by the air conditioner and the required time when the sensed indoor temperature is increased or decreased by a predetermined unit temperature and the indoor temperature is increased or decreased by the unit temperature, and updating the stored information based on at least one of the obtained power consumption and the required time.

The control method according to an embodiment includes the steps of: predicting the indoor environment in which the air conditioner is disposed based on the obtained power consumption and the required time, obtaining and storing power consumption information and time information corresponding to the predicted indoor environment. Here, the indoor environment may include at least one of the size of the indoor space in which the air conditioner is disposed, the degree of lighting and the humidity.

According to another aspect of the present invention, there is provided a control method which includes acquiring a power consumed by an air conditioner and a required time when a sensed indoor temperature is increased or decreased by a predetermined unit temperature, comparing at least one of the acquired power consumption and the required time with at least one of stored power consumption information and time information, and providing feedback according to the comparison result.

Here, the control method according to an embodiment may further include providing a guide to the indoor environment in which the air conditioner is located if the comparison result exceeds a predetermined error range.

The air conditioner according to an embodiment of the present invention may store a usage history including at least one of an operation mode and a desired temperature of the air conditioner per unit indoor temperature sensed, and control method according to an embodiment further includes acquiring the preferred mode and the preferred temperature based on the use history, and the operation of predicting in S920 may include predicting at least one of the power consumption and time required for the sensed indoor temperature to reach the preferred temperature on the preferred mode.

Here, the acquiring may include acquiring the user's preferred mode and the preferred temperature currently preferred at current time based on the current time.

Further, the operation of predicting may include predicting at least one of power consumption and time through the AI model, and the AI model is based on at least one of the power consumption information, the time information, and the indoor environment in which the air conditioner is disposed. The indoor environment may include at least one of the size of the indoor space in which the air conditioner is disposed, the degree of lighting and the humidity.

The control method according to an embodiment may include setting the air conditioner to a mode optimized for the current time if the current time is within a predetermined time range.

FIG. 10 is a block diagram illustrating a configuration of an air conditioner to learn and use an AI model according to an embodiment of the present invention.

Referring to FIG. 10, the air conditioner 100 may include at least one of a learning unit 1010 and a determination unit 1020.

The learning unit 1010 can generate or learn an AI model having a criterion for predicting the power consumption and time of the air conditioner 100 using the learning data. The learning unit 1010 can generate an AI model having a determination criterion using the collected learning data.

For example, the learning unit 1010 may learn to predict at least one of power consumption and time corresponding to desired temperature with the required power consumption and time information required to increase or decrease indoor temperature by unit temperature according to outdoor temperature as learning data. If the sensed indoor temperature is increased or decreased by a predetermined unit temperature, the learning unit 1010 may acquire the power consumed by the air conditioner 100 and the time required for the indoor temperature to be increased or decreased by the unit temperature, and generate, learn, or update the AI model on the basis of at least one of the power consumed by the air conditioner 100 and time required to increase and decrease the indoor temperature.

The determination unit 1020 may use predetermined data as input data of the learned AI model and predict at least one of power consumption and time.

For example, the determination unit 1020 may use at least one of the outdoor temperature, the indoor temperature, and the desired temperature as input data of the learned AI model and predict (or estimate, infer) at least one of power consumption and time required so that the indoor temperature reaches the desired temperature.

As an embodiment of the present invention, the learning unit 1010 and the determination unit 1020 may be included in the air conditioner 100, but this is merely and can be mounted inside an external server.

At least a part of the learning unit 1010 and at least a part of the determination unit 1020 according to an embodiment may be implemented in a software module or in the form of at least one hardware chip and mounted on the air conditioner 100. For example, at least one of the learning unit 1010 and the determination unit 1020 may be fabricated in the form of a dedicated hardware chip for AI, or a general-purpose processor (e.g., a CPU or an application processor) or a graphics-only processor (e.g., GPU) and may be mounted on the various electronic devices described above. At this time, the dedicated hardware chip for AI is a special processor specialized in probability calculation, and it has a higher parallel processing performance than the general processor, so that it is possible to quickly process the AI field such as machine learning. When the learning unit 1010 and the determination unit 1020 are implemented by a software module (or a program module including an instruction), the software module may be stored in a computer-readable non-transitory media. In this case, the software module may be provided by an operating system (OS) or by a predetermined application. Alternatively, some of the software modules may be provided by an OS, and some of the software modules may be provided by some applications.

FIG. 11A is a block diagram of a learning unit and a determination unit according to an embodiment of the present invention.

Referring to (a) of FIG. 11A, the learning unit 1010 according to some embodiments may include a learning data obtaining unit 1010-1 and a model learning unit 1010-4. The learning unit 1010 may further include at least one of a learning data preprocessing unit 1010-2, a learning data selecting unit 1010-3, and a model evaluating unit 1010-5, selectively.

The learning data obtaining unit 1010-1 can acquire learning data necessary for an AI model for predicting at least one of power consumption and time required. In the embodiment of the present invention, the learning data obtaining unit 1010-1 can acquire, as learning data, the power consumed by the air conditioner 100 and the required time, etc., as the indoor temperature is increased or decreased by the unit temperature. Also, the learning data obtaining unit 1010-1 can acquire, as learning data, a usage history or the like for acquiring the user's preferred mode, preference temperature, and the like. The learning data may be data collected or tested by the learning unit 1010 or the manufacturer of the learning unit 1010.

The model learning unit 1010-4 can use the learning data so that the AI model has a criterion for predicting at least one of the power consumption and the required time. For example, the model learning unit 1010-4 can make an AI model learn through supervised learning using at least a part of the learning data as a reference for predicting at least one of the power consumption and the required time. Alternatively, the model learning unit 1010-4 may make the AI model learn through unsupervised learning which finds a criterion to predict at least one of power consumption and required time through self-learning using learning data without supervised learning. Further, the model learning unit 1010-4 can make the AI model learn through reinforcement learning using, for example, feedback as to whether the determination result based on learning is correct. Also, the model learning unit 1010-4 can make an AI model learn using, for example, a learning algorithm including an error back-propagation method or a gradient descent.

The model learning unit 1010-4 may learn the selection criteria regarding which learning data is to be used to predict at least one of power consumption and required time using the input data.

The model learning unit 1010-4 can determine an AI model having a great relation between the input learning data and the basic learning data as an AI model to be learned, when a plurality of AI models exist in advance. In this case, the basic learning data may be pre-classified according to the data type, and the AI model may be pre-built for each data type. For example, the basic learning data may be pre-classified by various criteria such as an area where the learning data is generated, a time at which the learning data is generated, a size of the learning data, a genre of the learning data, a creator of the learning data, and types of an obj ect within learning data, and so on.

When the AI model is learned, the model learning unit 1010-4 can store the learned AI model. In this case, the model learning unit 1010-4 can store the learned AI model in the memory of the external server. Alternatively, the model learning unit 1010-4 may store the learned AI model in a memory of a server or an electronic device connected to an external server through a wired or wireless network.

The learning unit 1010 may further include the learning data preprocessing unit 1010-2 and the learning data selecting unit 1010-3 for improving the determination result of the AI model or saving resources or time required for generation of the AI model.

The learning data preprocessing unit 1010-2 can pre-process the acquired data so that the acquired data can be used for learning to predict at least one of the power consumption and the required time. The learning data preprocessing unit 1010-2 can process the acquired data into a predetermined format so that the model learning unit 1010-4 can use the acquired data to predict at least one of the power consumption and the required time.

The learning data selecting unit 1010-3 can select data acquired by the learning data obtaining unit 1010-1 or data necessary for learning from data preprocessed by the learning data preprocessing unit 1010-2. The selected learning data may be provided to the model learning unit 1010-4. The learning data selecting unit 1010-3 can select learning data necessary for learning from the acquired or preprocessed data in accordance with a predetermined selection criterion. The learning data selecting unit 1010-3 can also select learning data according to a predetermined selection criterion by learning by the model learning unit 1010-4.

The learning unit 1010, in order to improve a determination result of the AI model, may further include a model evaluating unit 1010-5.

The model evaluating unit 1010-5 may input evaluation data to the AI model, and when the determination result output from the evaluation data does not satisfy the predetermined criterion, may make the model learning unit1010-4 learn again. In this case, the evaluation data may be pre-defined data for evaluating the AI model.

For example, the model evaluating unit 1010-5 may determine, from among the determination results of the learned AI model about the evaluation data, that, when the number w or ratio of evaluation data of which determination result is not correct exceeds a preset threshold value, that predetermined criterion is not satisfied.

When there are a plurality of learned AI models, the model evaluating unit 1010-5 may evaluate whether each of the learned AI models satisfies a predetermined criterion, and determine a model satisfying the predetermined criteria as the final AI model. In this case, when there are a plurality of models satisfying a predetermined criterion, the model evaluating unit 1010-5 can determine any one or a predetermined number of models preset in descending order of the evaluation score as a final AI model.

Referring to (b) of FIG. 11A, the determination unit 1020 according to some embodiments may include the input data obtaining unit 1020-1 and the determination result providing unit 1020-4.

The determination unit 1020 may further include at least one of the input data preprocessing unit 1020-2, the input data selecting unit 1020-3, and the model updating unit 1020-5, selectively.

The input data obtaining unit 1020-1 can obtain data necessary for predicting at least one of power consumption and time required. As a result of the determination, the determination result providing unit 1020-4 can estimate at least one of the power consumption and the time required by applying the input data obtained by the input data obtaining unit 1020-1 to the learned AI model as an input value. As a result of the determination, the determination result providing unit 1020-4 may apply the data selected by the input data preprocessing unit 1020-2 or the input data selecting unit 1020-3, which will be described later, to the AI model to obtain the determination result.

In an embodiment, as a result of the determination, the determination result providing unit 1020-4 may apply the learned AI model to the outdoor temperature, the indoor temperature, and the desired temperature obtained by the input data obtaining unit- 1020-1, and predict at least one of the power consumption and the time required so that the indoor temperature reaches the desired temperature.

The determination unit 1020 may further include an input data preprocessing unit 1020-2 and an input data selecting unit 1020-3 in order to improve the determination result of the AI model or to save resources or time for providing a determination result.

The input data preprocessing unit 1020-2 can preprocess acquired data so that the acquired data can be used for predicting at least one of the power consumption and the required time. As a result of the determination, the input data preprocessing unit 1020-2 may processes the acquired data in a predefined format so as to use data obtained for predicting at least one of the power consumption and the time required for the determination result providing unit 1020-4.

The input data selecting unit 1020-3 can select data required for providing a response from the data acquired by the input data obtaining unit 1020-1 or the data preprocessed by the input data preprocessing unit 1020-2. The selected data may be provided to the determination result providing unit 1020-4 as a determination result. The input data selection unit 1020-3 can select some or all of the acquired or preprocessed data according to a predetermined selection criterion for providing a response. The input data selecting unit 1020-3 can also select data according to a predetermined selection criterion by learning by the model learning unit 1010-4.

The model updating unit 1020-5 can control the AI model to be updated based on the evaluation of the determination result provided by the determination result providing unit 1020-4 as a determination result. For example, the model updating unit 1020-5 may provide the model learning unit 1010-4 with the determination result provided by the providing unit 1020-4 as a determination result, so that the model learning unit 1010-4 may be asked to learn or update the AI model further. In particular, the model updating unit 1020-5 can re-learn the AI model based on feedback information according to user input.

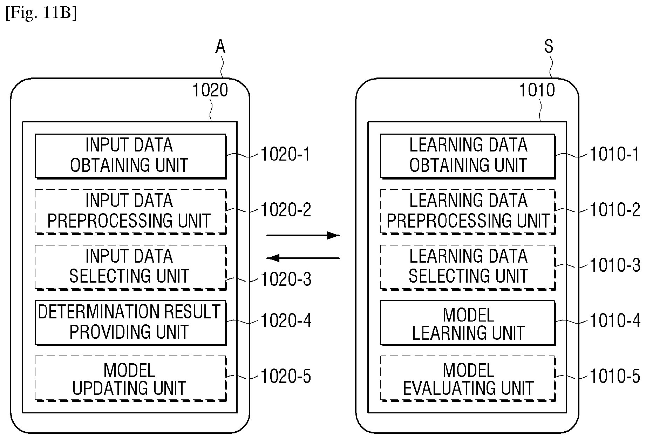

FIG. 11B is a view to illustrate an example of learning and determining data by interlocking an air conditioner and an external server according to an embodiment of the present invention.

Referring to FIG. 11B, the external server S can learn a criterion for predicting at least one of the power consumption and the required time, and the air conditioner 100 can provide at least one of the predicted power consumption and required time based on a learning result by the server (S).

In this case, the model learning unit 1010-4 of the server S can perform the function of the learning unit 1010 shown in FIG. 10. That is, the model learning unit 1010-4 of the server S may learn a criterion regarding which power information or time information is to be used to predict at least one of power consumption and required time, and how to predict at least one of power consumption and required time using the information.

The determination result providing unit 102-4 of the air conditioner 100 may apply the data selected by the input data selecting unit 1020-3 to the AI model generated by the server (S) to predict at least one of power consumption and required time. Alternatively, the determination result providing unit 1020-4 of the air conditioner 100 may receive an AI model generated by the server from the server, and predict at least one of power consumption and required time using the received AI model.

Meanwhile, the various embodiments described above can be implemented in a recording medium that can be read by a computer or a similar device using software, hardware, or a combination thereof. In some cases, the embodiments described herein may be implemented by the processor itself. According to a software implementation, embodiments such as the procedures and functions described herein may be implemented in separate software modules. Each of the software modules may perform one or more of the functions and operations described herein.

Meanwhile, computer instructions for performing the processing operations according to various embodiments of the present invention described above may be stored in a non-transitory computer-readable medium. Computer instructions stored in such non-volatile computer-readable media may cause a particular device as defined in claim 1 to perform processing operations according to various embodiments described above when executed by a processor.

Non-volatile computer readable medium means a medium that stores data for a short period of time such as a register, a cache, a memory, etc., but semi-permanently stores data and can be read by a device. Specific examples of non-transitory computer readable media include compact disc (CD), digital versatile disc (DVD), hard disk, Blu-ray disk, universal serial bus (USB), memory card, read only memory (ROM), etc.

## Claims

1. An air conditioner comprising:
a display (130);
a storage (120);
a sensor (110) configured to sense the indoor temperature;
a processor (140); and
a communication unit,
the processor (140) being configured to:
store, in the storage (120), information including power consumption information and time information which are required to increase or decrease an indoor temperature by a unit temperature according to an outdoor temperature;
receive, through the communication unit, outdoor temperature information corresponding to the outdoor temperature of an area in which the air conditioner is to be disposed
predict, based on a desired temperature being input, at least one of a first power consumption or a first required time for the indoor temperature to reach the desired temperature based on the information stored in the storage (120), the received outdoor temperature information and the indoor temperature,
provide at least one of the first power consumption or the first required time through the display (130),
based on the indoor temperature being increased or decreased by a predetermined unit temperature, obtain a second power consumption and a second required time which are consumed by the air conditioner for the indoor temperature to increase or decrease by the unit temperature,
compare at least one of the second power consumption or the second required time with at least one of the power consumption information or the time information, respectively,
provide a feedback according to a comparison result, and
based on the comparison result exceeding a predetermined error range, provide a guide on the indoor environment in which the air conditioner is positioned,
wherein the guide comprises one of guiding to check whether excessive outside air enters the indoor environment or guiding to check whether excessive outside light enters the indoor environment.

2. The air conditioner of claim 1, wherein the processor (140) is further configured to:
based on the indoor temperature being increased or decreased by a preset unit temperature, measure a second power consumption and a second required time which are consumed by the air conditioner for the indoor temperature to increase or decrease by the unit temperature, and
update the stored information based on at least one of the obtained power consumption or required time.

3. The air conditioner of claim 1,
wherein the storage (120) is configured to store a use history including at least one of an operation mode of the air conditioner according to the indoor temperature and the desired temperature, and
wherein the processor is further configured to:
obtain a preferred mode and a preferred temperature of a user based on the use history, and
predict at least one of a second power consumption or a second required time for the sensed indoor temperature to reach the preferred temperature in the preferred mode.

4. The air conditioner of claim 3, wherein the processor (140) is configured to, based on a present time, obtain the preferred mode and the preferred temperature of the user preferred at the present time.

5. The air conditioner of claim 6, wherein air conditioner is configured that the AI model is re-trained based on obtained information when at least one of power consumption information or time information corresponding to the predicted indoor environment are obtained.

6. The air conditioner of claim 1, wherein the processor (140) is further configured to:
in response to a difference between the indoor temperature and the desired temperature being greater than or equal to a predetermined value, set the air conditioner to a first mode, and predict at least one of the first power consumption or the first required time for the indoor temperature to reach the desired temperature based on the first mode, and
in response to the difference between the indoor temperature and the desired temperature being less than the predetermined value, set the air conditioner to a second mode, and predict at least one of the first power consumption or the first required time for the sensed indoor temperature to reach the desired temperature based on the second mode.

7. A controlling method of an air conditioner using power consumption information and time information which are required to increase or decrease an indoor temperature by a unit temperature according to an outdoor temperature, the method comprising:
sensing (S210) the indoor temperature;
based on a desired temperature being input, predicting (S220) at least one of a first power consumption or a first required time for the indoor temperature to reach the desired temperature based on information stored in a storage (120); and
outputting (S230) at least one of the first power consumption or the first required time,
based on the indoor temperature being increased or decreased by a predetermined unit temperature, obtaining a second power consumption and a second required time which are consumed by the air conditioner for the indoor temperature to increase or decrease by the unit temperature,
comparing the second power consumption and the second required time with at least one of the power consumption information or the time information, respectively,
providing a feedback according to a comparison result, and
based on the comparison result exceeding a predetermined error range, providing a guide on the indoor environment in which the air conditioner is positioned,
wherein the guide comprises one of guiding to check whether excessive outside air enters the indoor environment or guiding to check whether excessive outside light enters the indoor environment.

8. The method of claim 7, further comprising:
receiving outdoor temperature information corresponding to the outdoor temperature of an area in which the air conditioner is to be disposed,
wherein the predicting comprises predicting at least one of the first power consumption or the first required time to reach the desired temperature based on the received outdoor temperature information and the indoor temperature.

## Patentansprüche

1. Klimaanlage, umfassend:
eine Anzeige (130);
einen Speicher (120);
einen Sensor (110), der konfiguriert ist, um die Innentemperatur zu erfassen;
einen Prozessor (140); und
eine Kommunikationseinheit,
wobei der Prozessor (140) konfiguriert ist zum:
Speichern, in dem Speicher (120), von Informationen, die Leistungsverbrauchsinformationen und Zeitinformationen umfassen, die erforderlich sind, um eine Innentemperatur um eine Einheitstemperatur in Abhängigkeit von einer Außentemperatur zu erhöhen oder zu senken;
Empfangen, über die Kommunikationseinheit, von Außentemperaturinformationen, die der Außentemperatur eines Bereichs entsprechen, in dem die Klimaanlage angeordnet werden soll;
Vorhersagen, basierend auf der Eingabe einer gewünschten Temperatur, von mindestens einem eines ersten Leistungsverbrauchs oder einer ersten erforderlichen Zeit für die Innentemperatur, um die gewünschte Temperatur zu erreichen, basierend auf den im Speicher (120) gespeicherten Informationen, den empfangenen Außentemperaturinformationen und der Innentemperatur,
Angeben von mindestens einem des ersten Leistungsverbrauchs oder der ersten erforderlichen Zeit über die Anzeige (130),
basierend auf der Innentemperatur, die um eine vorgegebene Einheitstemperatur erhöht oder gesenkt wird, Erhalten eines zweiten Leistungsverbrauchs und einer zweiten erforderlichen Zeit, die von der Klimaanlage verbraucht werden, um die Innentemperatur um die Einheitstemperatur zu erhöhen oder zu senken,
Vergleichen mindestens eines des zweiten Leistungsverbrauchs oder der zweiten erforderlichen Zeit mit mindestens jeweils einer der Leistungsverbrauchsinformationen oder der Zeitinformationen,
Geben einer Rückmeldung entsprechend eines Vergleichsergebnisses, und
basierend auf dem Vergleichsergebnis, das einen vorgegebenen Fehlerbereich überschreitet, Bereitstellen einer Führung für die Innenraumumgebung, in der die Klimaanlage positioniert ist,
wobei die Führung eine von einer Führung zum Prüfen, ob zu viel Außenluft in den Innenraum gelangt, oder einer Führung zum Prüfen, ob zu viel Außenlicht in den Innenraum gelangt, umfasst.

2. Klimaanlage nach Anspruch 1, wobei der Prozessor (140) ferner konfiguriert ist zum:
basierend auf der Innentemperatur, die um eine voreingestellte Einheitstemperatur erhöht oder gesenkt wird, Messen eines zweiten Leistungsverbrauchs und einer zweiten erforderlichen Zeit, die von der Klimaanlage verbraucht werden, um die Innentemperatur um die Einheitstemperatur zu erhöhen oder zu senken, und
Aktualisieren der gespeicherten Informationen basierend auf mindestens einem dem erhaltenen Leistungsverbrauch oder der erforderlichen Zeit.

3. Klimaanlage nach Anspruch 1,
wobei der Speicher (120) konfiguriert ist, um eine Verwendungshistorie zu speichern, die mindestens einen von einem Betriebsmodus der Klimaanlage gemäß der Innentemperatur und der gewünschten Temperatur umfasst, und
wobei der Prozessor ferner konfiguriert ist zum:
Erhalten eines bevorzugten Modus und einer bevorzugten Temperatur eines Benutzers basierend auf der Verwendungshistorie, und
Vorhersagen von mindestens einem eines zweiten Leistungsverbrauchs oder einer zweiten erforderlichen Zeit, damit die erfasste Innentemperatur die bevorzugte Temperatur im bevorzugten Modus erreicht.

4. Klimaanlage nach Anspruch 3, wobei der Prozessor (140) konfiguriert ist, um basierend auf einer aktuellen Zeit den bevorzugten Modus und die bevorzugte Temperatur des Benutzers zu erhalten, die zu der aktuellen Zeit bevorzugt werden.

5. Klimaanlage nach Anspruch 6, wobei die Klimaanlage so konfiguriert ist, dass das KI-Modell basierend auf den erhaltenen Informationen neu trainiert wird, wenn mindestens eines von Leistungsverbrauchsinformationen oder Zeitinformationen, die der vorhergesagten Innenraumumgebung entsprechen, erhalten wird.

6. Klimaanlage nach Anspruch 1, wobei der Prozessor (140) ferner konfiguriert ist zum:
als Reaktion darauf, dass eine Differenz zwischen der Innentemperatur und der gewünschten Temperatur größer oder gleich einem vorgegebenen Wert ist, Einstellen der Klimaanlage auf einen ersten Modus, und basierend auf dem ersten Modus, Vorhersagen von mindestens einem des ersten Leistungsverbrauchs oder der ersten erforderlichen Zeit, damit die Innentemperatur die gewünschte Temperatur erreicht, und
als Reaktion darauf, dass die Differenz zwischen der Innentemperatur und der gewünschten Temperatur kleiner als der vorgegebene Wert ist, Einstellen der Klimaanlage auf einen zweiten Modus, und basierend auf dem zweiten Modus, Vorhersagen von mindestens einem dem ersten Leistungsverbrauch oder der ersten erforderlichen Zeit, damit die Innentemperatur die gewünschte Temperatur erreicht.

7. Steuerungsverfahren einer Klimaanlage unter Verwendung von Leistungsverbrauchsinformationen und Zeitinformationen, die erforderlich sind, um eine Innentemperatur um eine Einheitstemperatur in Abhängigkeit von einer Außentemperatur zu erhöhen oder zu senken, wobei das Verfahren Folgendes umfasst:
Erfassen (S210) der Innentemperatur;
basierend auf der Eingabe einer gewünschten Temperatur, Vorhersagen (S220) von mindestens einem eines ersten Leistungsverbrauchs oder einer ersten erforderlichen Zeit für die Innentemperatur, um die gewünschte Temperatur zu erreichen, basierend auf Informationen, die in einem Speicher (120) gespeichert sind; und
Ausgeben (S230) von mindestens einem des ersten Leistungsverbrauchs oder der ersten erforderlichen Zeit,
basierend auf der Innentemperatur, die um eine vorgegebene Einheitstemperatur erhöht oder gesenkt wird, Erhalten eines zweiten Leistungsverbrauchs und einer zweiten erforderlichen Zeit, die von der Klimaanlage verbraucht werden, um die Innentemperatur um die Einheitstemperatur zu erhöhen oder zu senken,
Vergleichen des zweiten Leistungsverbrauchs und der zweiten erforderlichen Zeit mit mindestens jeweils einer der Leistungsverbrauchsinformationen oder der Zeitinformationen,
Geben einer Rückmeldung entsprechend eines Vergleichsergebnisses, und
basierend auf dem Vergleichsergebnis, das einen vorgegebenen Fehlerbereich überschreitet, Bereitstellen einer Führung für die Innenraumumgebung, in der die Klimaanlage positioniert ist,
wobei die Führung eine von einer Führung zum Prüfen, ob zu viel Außenluft in den Innenraum gelangt, oder einer Führung zum Prüfen, ob zu viel Außenlicht in den Innenraum gelangt, umfasst.

8. Verfahren nach Anspruch 7, ferner umfassend:
Empfangen von Außentemperaturinformationen, die der Außentemperatur eines Bereichs entsprechen, in dem die Klimaanlage angeordnet werden soll,
wobei die Vorhersage die Vorhersage von mindestens einem des ersten Leistungsverbrauchs oder der ersten erforderlichen Zeit zum Erreichen der gewünschten Temperatur basierend auf den empfangenen Außentemperaturinformationen und der Innentemperatur umfasst.

## Revendications

1. Climatiseur comprenant :
un affichage (130) ;
un stockage (120) ;
un capteur (110) configuré pour détecter la température intérieure ;
un processeur (140) ; et
une unité de communication,
le processeur (140) étant configuré pour :
stocker, dans le stockage (120), des informations comprenant des informations de consommation d'énergie et des informations de temps qui sont nécessaires pour augmenter ou diminuer une température intérieure d'une température d'unité en fonction d'une température extérieure ;
recevoir, par l'intermédiaire de l'unité de communication, des informations de température extérieure correspondant à la température extérieure d'une zone dans laquelle le climatiseur doit être disposé ;
prédire, en se basant sur l'entrée d'une température souhaitée, au moins un d'une première consommation d'énergie ou d'un premier temps nécessaire pour que la température intérieure atteigne la température souhaitée, en se basant sur les informations stockées dans le stockage (120), les informations de température extérieure reçues et la température intérieure,
fournir au moins un de la première consommation d'énergie ou du premier temps requis, par l'intermédiaire de l'affichage (130),
en se basant sur l'augmentation ou la diminution de la température intérieure d'une température d'unité prédéterminée, obtenir une seconde consommation d'énergie et un second temps nécessaire qui sont consommés par le climatiseur pour que la température intérieure augmente ou diminue de la température d'unité,
comparer au moins l'un de la seconde consommation d'énergie ou du second temps nécessaire avec au moins l'une des informations de consommation d'énergie ou des informations de temps, respectivement,
fournir un retour d'information en fonction d'un résultat de la comparaison, et
en se basant sur le résultat de la comparaison dépassant une plage d'erreur prédéterminée, fournir un guide sur l'environnement intérieur dans lequel le climatiseur est positionné,
dans lequel le guide comprend un d'un guide permettant de vérifier si un excès d'air extérieur pénètre dans l'environnement intérieur ou d'un guide permettant de vérifier si un excès de lumière extérieure pénètre dans l'environnement intérieur.

2. Climatiseur de la revendication 1, dans lequel le processeur (140) est en outre configuré pour :
en se basant sur l'augmentation ou la diminution de la température intérieure d'une température d'unité prédéfinie, mesurer une seconde consommation d'énergie et un second temps nécessaire qui sont consommés par le climatiseur pour que la température intérieure augmente ou diminue de la température d'unité, et
mettre à jour les informations stockées sur la base d'au moins un de la consommation d'énergie obtenue ou du temps nécessaire.

3. Climatiseur de la revendication 1,
dans lequel le stockage (120) est configuré pour stocker un historique d'utilisation comprenant au moins un d'un mode d'opération du climatiseur en fonction de la température intérieure et de la température souhaitée, et
dans lequel le processeur est en outre configuré pour :
obtenir un mode préféré et une température préférée d'un utilisateur en se basant sur l'historique d'utilisation, et
prédire au moins l'un d'une seconde consommation d'énergie ou d'un second temps nécessaire pour que la température intérieure détectée atteigne la température préférée dans le mode préféré.

4. Climatiseur de la revendication 3, dans lequel le processeur (140) est configuré pour, en se basant sur un temps présent, obtenir le mode préféré et la température préférée de l'utilisateur préféré au temps présent.

5. Climatiseur de la revendication 6, dans lequel le climatiseur est configuré pour que le modèle d'IA soit réentraîné sur la base des informations obtenues lorsqu'au moins une des informations de consommation d'énergie ou des informations de temps correspondant à l'environnement intérieur prédit est obtenue.

6. Climatiseur de la revendication 1, dans lequel le processeur (140) est en outre configuré pour :
en réponse à une différence entre la température intérieure et la température souhaitée supérieure ou égale à une valeur prédéterminée, régler le climatiseur sur un premier mode, et prédire au moins un de la première consommation d'énergie ou du premier temps nécessaire pour que la température intérieure atteigne la température souhaitée, sur la base du premier mode, et
en réponse à la différence entre la température intérieure et la température souhaitée inférieure à la valeur prédéterminée, régler le climatiseur sur un second mode, et prédire au moins un de la première consommation d'énergie ou du premier temps nécessaire pour que la température intérieure détectée atteigne la température souhaitée, en se basant sur le second mode.

7. Procédé de commande d'un climatiseur utilisant des informations de consommation d'énergie et des informations de temps qui sont nécessaires pour augmenter ou diminuer une température intérieure d'une température d'unité en fonction d'une température extérieure, le procédé comprenant :
détecter (S210) la température intérieure ;
sur la base de l'entrée d'une température souhaitée, prédire (S220) au moins un d'une première consommation d'énergie ou d'un premier temps nécessaire pour que la température intérieure atteigne la température souhaitée, sur la base des informations stockées dans un stockage (120) ; et
sortir (S230) au moins un de la première consommation d'énergie ou du premier temps nécessaire,
en se basant sur l'augmentation ou la diminution de la température intérieure d'une température d'unité prédéterminée, obtenir une seconde consommation d'énergie et un second temps nécessaire qui sont consommés par le climatiseur pour que la température intérieure augmente ou diminue de la température d'unité,
comparer la seconde consommation d'énergie et le second temps nécessaire avec au moins l'une des informations de consommation d'énergie ou des informations de temps, respectivement,
fournir un retour d'information en fonction d'un résultat de la comparaison, et
en se basant sur le résultat de la comparaison dépassant une plage d'erreur prédéterminée, fournir un guide sur l'environnement intérieur dans lequel le climatiseur est positionné,
dans lequel le guide comprend un d'un guide permettant de vérifier si un excès d'air extérieur pénètre dans l'environnement intérieur ou d'un guide permettant de vérifier si un excès de lumière extérieure pénètre dans l'environnement intérieur.

8. Procédé de la revendication 7, comprenant en outre :
recevoir des informations de température extérieure correspondant à la température extérieure d'une zone dans laquelle le climatiseur doit être disposé,
dans lequel la prédiction comprend la prédiction d'au moins un d'une première consommation d'énergie ou du premier temps nécessaire pour atteindre la température souhaitée, sur la base des informations de température extérieure reçues et de la température intérieure.
